# EUROPEAN PATENT APPLICATION

(11) **EP 1 967 285 A1**
(43) Date of publication of application: **10.09.2008**
(21) Application number: 06834210.4
(22) Date of filing: 07.12.2006
(51) Int. Cl.: B05D 5/00, B08B 17/02, B32B 7/02

(54) **METHOD FOR PROTECTING BASE**

(30) Priority: 27.12.2005 JP 2005374511
(71) Applicant: Sustainable Titania Technology Incorporated, Tokyo 151-0053 (JP)
(72) Inventor: OGATA, Shiro, Tokyo 151-0053 (JP)
(74) Representative: Vaillant, Jeanne
(86) International application number: PCT/JP2006/324455
(87) International publication number: WO 2007/077712

(57) **Abstract**

The present invention provides a novel method for preventing or reducing color degradation or color change of a substrate over time, and is characterized by arranging at least one positively-charged substance selected from the group consisting of (1) a positive ion; (2) a conductor or dielectric having a positive charge; and (3) a composite formed from a conductor and a dielectric or a semiconductor, on a surface of a substrate, and arranging an insulating organic or inorganic substance on the aforementioned positively-charged substance.

## Description

### TECHNICAL FIELD

The present invention relates to a method for preventing or reducing contamination of a surface of a substrate, and protecting the surface of the substrate by imparting a positive charge to the surface of the substrate.

### BACKGROUND ART

Conventionally, it is known that various colored substrates (such as printed articles, building materials, fibers, organic polymer resin products, and the like) become faded and discolored over time. Factors in such fading and discoloration include photodegradation, adhesion of contaminants to the surface of the substrate, and the like. Various methods have been developed as countermeasures therefor.

For example, in order to prevent photodegradation, a method in which an ultraviolet absorber is mixed in a substrate has been adopted.

Moreover, in order to prevent or remove adhesion of contaminants from the surface of a substrate, a method in which a coating film having an anti-contamination function or a self-cleaning function is formed on the surface of a substrate has been developed. An example of the aforementioned method is a method in which a photocatalytic layer is formed by employing anatase-type titanium oxide, described in Japanese Unexamined Patent Application, First Publication No. H09-262481.
Patent Document 1: Japanese Unexamined Patent Application, First Publication No. H09-262481

### DISCLOSURE OF THE INVENTION

### Problems to be Solved by the Invention

However, in the case of mixing an ultraviolet absorber in a substrate, the ultraviolet absorber is decomposed by the effects of components included in the substrate, and sufficient ultraviolet absorbing effects cannot be exhibited.

In addition, in the case of imparting a photocatalytic function to the surface of a substrate, the substrate itself may be decomposed and degraded by the photocatalytic effects, depending on the type of substrate. In addition, since the substrate becomes negatively charged, there is a problem in electrostatically adsorbing contaminants with a positive charge.

The present invention has an objective to provide a novel method for preventing or reducing fading or discoloration of a substrate over time, and at the same time, preventing and reducing adhesion of contaminants.

### Means for Solving the Problems

The objective of the present invention can be achieved by arranging at least one positively-charged substance selected from the group consisting of
(1) a positive ion;
(2) a conductor or dielectric having a positive charge; and
(3) a composite formed from a conductor and a dielectric or a semiconductor
on a surface of a substrate or in a surface layer of the substrate, and coating said positively-charged substance with an insulating organic or inorganic substance, or arranging an insulating organic or inorganic substance on said positively-charged substance.

The aforementioned organic or inorganic substance is preferably in the form of a film, and in particular, is preferably formed from a water-repellent or hydrophilic polymer.

The aforementioned positively-charged substance preferably forms a layer. In this case, an intermediate layer may be formed between the surface of the aforementioned substrate and the aforementioned positively-charged substance layer.

### EFFECTS OF THE INVENTION

Airborne pollutants and/or contaminants adhered on the substrate are photo-oxidized by means of sunlight or the like, and a positive charge is acquired. On the surface of a substrate treated by means of the method according to the present invention, a positive charge is also produced although the aforementioned surface is electrically screened by the insulating organic or inorganic substance. For this reason, the aforementioned contaminants are electrostatically repelled, and thereby, naturally separated from the surface of the substrate. Therefore, it is possible to self-clean the surface of the substrate.

In addition, when the aforementioned insulating organic or inorganic substance is formed from a water-repellent or hydrophilic polymer, the aforementioned self-cleaning effects can be added to the substrate, while the surface properties such as water-repellent properties or hydrophilic properties are maintained. In particular, when a fluorine-based water repellent agent is used as the aforementioned insulating organic or inorganic substance, the properties of the substrate surface can change from water-repellent properties to hydrophilic properties by controlling exposure of electromagnetic waves on the surface of the substrate. For this reason, adhesion of contaminants to the surface of the substrate can be prevented or reduced for a long time. Furthermore, in the present invention, antifogging properties can be provided to the substrate.

In addition, the substrate treated by means of the method of the present invention possesses increased resistance with respect to the effects of sunlight or the like themselves. Therefore, the substrate can be greatly protected from photodegradation caused by sunlight or the like.

In the present invention, due to the aforementioned effects, fading or discoloration of the substrate can be prevented or reduced for a long period of time.

### BRIEF DESCRIPTION OF THE DRAWINGS

FIG. 1 is a diagram showing a mechanism of imparting a positive charge by a composite employed in the present invention.
FIG. 2 is a drawing showing an outline of an example of a first method for manufacturing a metal-doped titanium oxide.
FIG. 3 is a diagram showing a first mode of imparting a positive charge to a substrate.
FIG. 4 is a diagram showing a second mode of imparting a positive charge to a substrate.
FIG. 5 is a diagram showing a third mode of imparting a positive charge to a substrate.
FIG. 6 is a diagram showing a fourth mode of imparting a positive charge to a substrate.
FIG. 7 is a diagram showing a mechanism of removing contaminants from the surface of the substrate which carries a positive charge.

### BEST MODES FOR CARRYING OUT THE INVENTION

With respect to contaminants which cause fading or discoloration of the surface of a substrate, inorganic substances such as airborne carbons and/or organic substances such as oils are gradually deposited on the surface of the substrate, and thereby, they adhere to the surface of the substrate.

The present invention is characterized by removal of the aforementioned contaminants from the substrate, or preventing or reducing adhesion of these contaminants to the substrate by means of electrostatic repulsion.

It is believed that mainly outdoor airborne contaminants, and in particular oil components, are subjected to a so-called photooxidation reaction due to various types of electromagnetic radiation such as sunlight and the like, and are under the "oxidized" condition.

A photooxidation reaction indicates a phenomenon in which, when hydroxyl radicals (^{·}OH) or singlet oxygen (¹O₂) are produced from oxygen (O₂) or moisture (H₂O) on the surface of an organic product or an inorganic product by means of the effects of electromagnetic radiation such as sunlight or the like, electrons (e⁻) are withdrawn from the aforementioned organic or inorganic product to thereby oxidize it. Due to the aforementioned oxidation, in the organic product, the molecular structure changes, so that discoloration which corresponds to a so-called deterioration or embitterment phenomenon is observed; in the inorganic product, and in particular, a metal, rust occurs. The surface of the "oxidized" organic product or inorganic product is thus positively charged by withdrawal of electrons (e⁻).

In the present invention, by imparting a positive charge on the surface of the substrate, the aforementioned organic product or inorganic product is naturally withdrawn from the surface of the substrate by means of electrostatic repulsion. As a method for imparting a positive charge on the surface of the substrate, in the present invention, a positive ion, a conductor or dielectric having a positive charge, a composite formed from a conductor and a dielectric or a semiconductor, or a mixture thereof is employed.

The aforementioned positive ion is not particularly restricted. As the positive ion, an ion of a metal element such as aluminum, tin, cesium, indium, cerium, selenium, chromium, nickel, antimony, iron, copper, manganese, tungsten, zirconium, zinc, or the like is preferable. A non-metal ion of a silicon compound or SiO₂ can also be used. The valency of the ion is not particularly limited. For example, a monovalent to tetravalent positive ion can be employed.

As a supply source of the aforementioned metal ion, a metal salt can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, cesium chloride, indium (III) chloride, cerium (III) chloride, selenium tetrachloride, copper (II) chloride, manganese chloride, tungsten tetrachloride, tungsten oxydichloride, potassium tungstate, zirconium oxychloride, zinc chloride, and the like. In addition, hydroxides or oxides such as indium hydroxide, tungstosilicic acid, or the like can also be employed.

Examples of the conductor or dielectric having a positive charge include conductors or dielectrics in which positive charges are generated, other than the aforementioned positive ions. As examples thereof, mention may be made of, for example, positive electrodes of batteries, formed from various conductors described below, and dielectrics such as wool, nylon, and the like which are positively charged by friction.

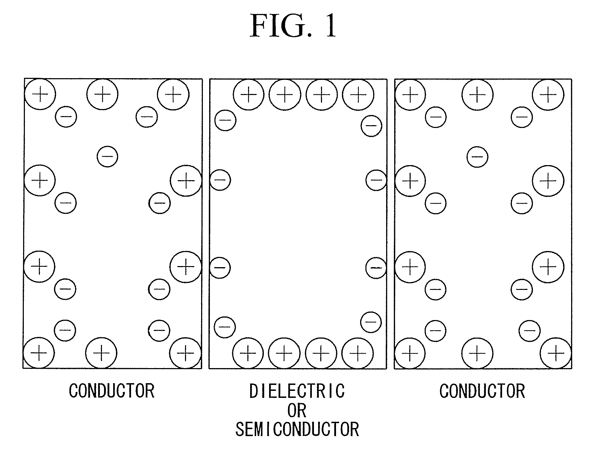

Next, the principle of imparting a positive charge by the aforementioned composite is shown in FIG. 1.

FIG. 1 is a diagram in which a combination of (a conductor)-(a dielectric or a semiconductor)-(a conductor) is arranged on the surface of a substrate or in a surface layer of the substrate, not shown in the drawing. The conductor can have a positively charged state on the surface due to the presence of free electrons at a high concentration in which electrons can be freely moved inside thereof. In addition, as the conductor, a conductive substance containing positive ions can also be employed.

On the other hand, the dielectric or semiconductor adjacent to the conductors is subjected to charge polarization by the effects of the charge conditions on the surface of the conductor. As a result, at the side of the dielectric or semiconductor adjacent to the conductor, a negative charge is produced, while at the side of the dielectric or semiconductor which is not adjacent to the conductor, a positive charge is produced. Due to the aforementioned effects, the surface of the combination of (a conductor)-(a dielectric or a semiconductor)-(a conductor) is positively charged, and a positive charge is provided on the surface of the substrate. The size of the aforementioned composite (which means the length of the longest axis passing through the composite) can range from 1 nm to 100 µm, and preferably ranges from 1 nm to 10 µm, more preferably ranges from 1 nm to 1 µm, and particularly preferably ranges from 1 nm to 100 nm.

The conductor for forming the composite employed in the present invention is preferably a metal in view of durability. Examples thereof include metals such as aluminum, tin, cesium, indium, cerium, selenium, chromium, nickel, antimony, iron, silver, copper, manganese, platinum, tungsten, zirconium, zinc, or the like. The shape of the conductor is not particularly restricted. The conductor may be in any shape such as particles, flakes, fibers, or the like.

As the conductor, a metal salt of a certain metal can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, platinum (II) chloride, tungsten tetrachloride, tungsten oxydichloride, potassium tungstate, gold chloride, zirconium oxychloride, zinc chloride, and the like. In addition, hydroxides or oxides such as indium hydroxide, tungstosilicic acid, or the like can also be employed.

As the conductor, a conductive polymer such as polyaniline, polypyrrol, polythiophene, polythiophene vinylon, polyisothianaphthene, polyacetylene, polyalkyl pyrrol, polyalkyl thiophene, poly-p-phenylene, polyphenylene vinylon, polymethoxyphenylene, polyphenylene sulfide, polyphenylene oxide, polyanthrathene, polynaphthalene, polypyrene, polyazulene, or the like can also be employed.

As the semiconductor, for example, C, Si, Ge, Sn, GaAs, Inp, GeN, ZnSe, PbSnTe, or the like, can be employed, and a semiconductor metal oxide, a photosemiconductor metal, or a photosemiconductor metal oxide can also be employed. Preferably, in addition to titanium oxide (TiO₂), ZnO, SrTiOP₃, CdS, CdO, CaP, InP, In₂O₃, CaAs, BaTiO₃, K₂NbO₃, Fe₂O₃, Ta₂O₃, WO₃, NiO, Cu₂O, SiC, SiO₂, MoS₃, InSb, RuO₂, CeO₂, or the like can be employed. A compound in which the photocatalytic effects are inactivated by Na or the like is preferable.

As the dielectric, barium titanate (PZT) which is a strong dielectric, so-called SBT, BLT, or a composite metal such as PZT, PLZT-(Pb, La) (Zr, Ti)O₃, SBT, SBTN-SrBi₂(Ta, Nb)₂O₉, BST-(Ba, Sr)TiO₃, LSCO-(La, Sr)CoO₃, BLT, BIT-(Bi, La)₄Ti₃O₁₂, BSO-Bi₂SiO₅, or the like can be employed. In addition, various weak dielectric materials such as a silane compound, a silicone compound, or a so-called organomodified silica compound, which is an organic silicon compound, or an organic polymer insulating film allylene ether-based polymer, benzocyclobutene, fluorine-based polymer parylene N or F, a fluorinated amorphous carbon, or the like can also be employed.

As the composite formed from the conductor and the dielectric or semiconductor, any combinations of the conductors and the dielectrics or the semiconductors can be employed as long as the composites can impart positive charges on the surface of the substrate. In view of the self-cleaning properties of the surface of the substrate, a metal-doped titanium oxide is preferably employed. As the aforementioned metal, at least one metal element selected from the group consisting of copper, manganese, nickel, cobalt, iron, and zinc can be employed. As a titanium oxide, various oxides and peroxides such as TiO₂, TiO₃, TiO, TiO₃/nH₂O, and the like can be employed. In particular, titanium peroxide having a peroxy group is preferable. The titanium oxide may be amorphous-type, anatase-type, brookite-type, or rutile-type. These types may be mixed. Amorphous-type titanium oxide is preferable.

Amorphous-type titanium oxide does not have photocatalytic effects. In contrast, anatase-type, brookite-type, and rutile-type titanium oxides exhibit photocatalytic effects, but if copper, manganese, nickel, cobalt, iron or zinc in a specified concentration or more is compounded therewith, the aforementioned photocatalytic effects are lost. Therefore, the aforementioned metal-doped titanium oxides exhibit no photocatalytic effects. Amorphous-type titanium oxide can be converted into anatase-type titanium oxide over time by means of heating by sunlight, or the like. However, when copper, manganese, nickel, cobalt, iron or zinc is compounded therewith, the aforementioned photocatalytic effects are lost. As a result, the aforementioned metal-doped titanium oxide exhibits no photocatalytic effects over time.

As a method for manufacturing the aforementioned metal-doped titanium oxide, a manufacturing method based on a hydrochloric acid method or sulfuric acid method which is a general method for manufacturing titanium dioxide powders may be employed, or a manufacturing method using any of various liquid-dispersed titania solutions may be employed. The aforementioned metal can form a composite with titanium oxide in any step of the manufacturing method.

For example, examples of a method for manufacturing the aforementioned metal-doped titanium oxide include the first to third manufacturing methods described below, and a sol-gel method which is conventionally known.

### First Manufacturing Method

First, a compound of tetravalent titanium such as titanium tetrachloride or the like and a base such as ammonia or the like are reacted together to form titanium hydroxide. Subsequently, the aforementioned titanium hydroxide is peroxidized with an oxidizing agent to form ultra-fine particles of amorphous-type titanium peroxide. The aforementioned reaction is preferably carried out in an aqueous medium. In addition, if a heating treatment is further carried out, the amorphous-type titanium peroxide can be converted into anatase-type titanium peroxide. In one of the aforementioned steps, at least one of copper, manganese, nickel, cobalt, iron, zinc, and compounds thereof is mixed therein.

The oxidizing agent for use in peroxidation is not particularly restricted. Various oxidizing agents can be employed as long as a peroxide of titanium, that is, titanium peroxide, can be produced. Hydrogen peroxide is preferable. In the case of employing an aqueous solution of hydrogen peroxide as an oxidizing agent, the concentration of hydrogen peroxide is not particularly limited. A concentration thereof ranging from 30 to 40% is preferable. Before the peroxidation reaction is carried out, titanium hydroxide is preferably cooled. The cooling temperature preferably ranges from 1 to 5°C.

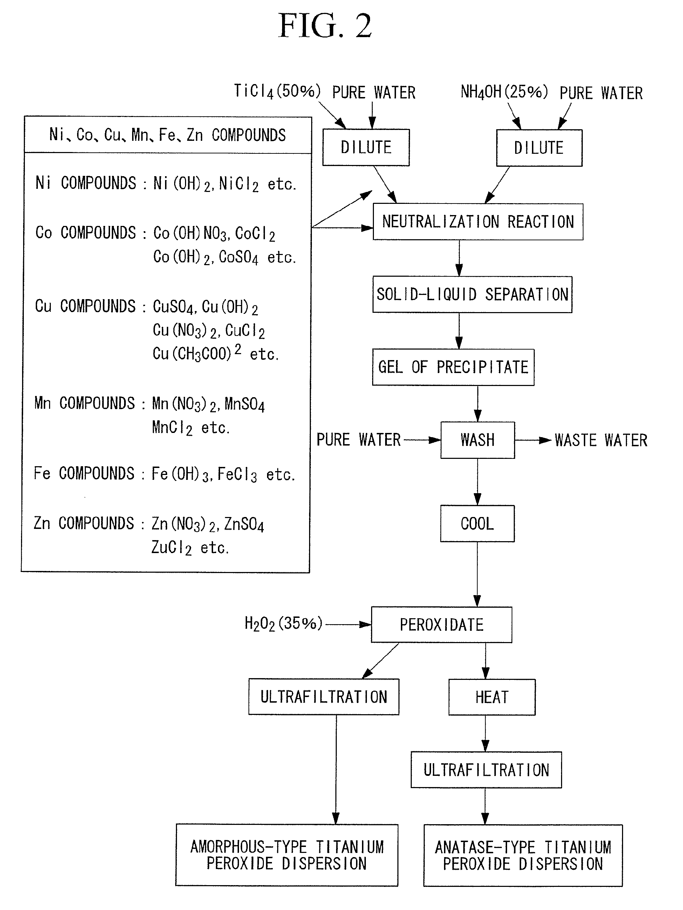

One example of the aforementioned first manufacturing method is shown in FIG. 2. In the manufacturing method shown therein, an aqueous solution of titanium tetrachloride and aqueous ammonia are mixed together in the presence of at least one of compounds of copper, manganese, nickel, cobalt, iron, or zinc, and thereby a mixture of a hydroxide of the aforementioned metal and a hydroxide of titanium is produced. Here, there are no particular limitations on the concentration or temperature of the reaction mixture, but the reaction is preferably carried out in a dilute solution at room temperature. The aforementioned reaction is a neutralization reaction, and therefore, it is preferable to finally adjust the pH of the reaction mixture to approximately pH 7.

The hydroxides of the metal and titanium obtained above are washed with purified water, followed by cooling to approximately 5°C. Subsequently, the hydroxides are peroxidized with an aqueous solution of hydrogen peroxide. Thereby, an aqueous dispersion containing fine particles of amorphous-type titanium oxide having a peroxy group which is doped with a metal, i.e. an aqueous dispersion containing a metal-doped titanium oxide, can be produced.

### Second Manufacturing Method

A compound of tetravalent titanium such as titanium tetrachloride or the like is peroxidized with an oxidizing agent, and the peroxidized product is reacted with a base such as ammonia or the like to form ultra-fine particles of amorphous-type titanium peroxide. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of copper, manganese, nickel, cobalt, iron, zinc, and compounds thereof is mixed therein.

### Third Manufacturing Method

A compound of tetravalent titanium such as titanium tetrachloride or the like is reacted together with an oxidizing agent and a base to carry out formation of titanium hydroxide and peroxidation thereof at the same time, and thereby, ultra-fine particles of amorphous-type titanium peroxide are formed. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of copper, manganese, nickel, cobalt, iron, zinc, and compounds thereof is mixed therein.

Needless to say, in the first to third manufacturing methods, a mixture of the amorphous-type titanium peroxide and the anatase-type titanium peroxide obtained by heating the aforementioned amorphous-type titanium peroxide can be employed as a metal-doped titanium oxide.

### Manufacturing Method Using Sol-Gel Method

A solvent such as water, an alcohol, or the like, and an acid or base catalyst are mixed and stirred with a titanium alkoxide to hydrolyze the titanium alkoxide. As a result, a sol solution of ultra-fine particles of titanium oxide is produced. Before or after the hydrolysis step, at least one of copper, manganese, nickel, cobalt, iron, zinc, and compounds thereof is mixed therein. The titanium oxide obtained above is an amorphous-type titanium oxide having a peroxy group.

As the aforementioned titanium alkoxide, a compound represented by the general formula: Ti(OR')₄, wherein R' is an alkyl group, or a compound in which one or two of the alkoxide groups (OR') in the aforementioned general formula have been substituted with carboxyl groups or beta-dicarbonyl groups, or a mixture thereof is preferable.

Specific examples of the aforementioned titanium alkoxide include Ti(O-iSO-C₃H₇)₄, Ti(O-n-C₄H₉)₄, Ti(O-CH₂CH(C₂H₅)C₄H₉)₄, Ti(O-C₁₇H₃₅)₄, Ti(O-iSO-C₃H₇)₂[CO(CH₃)CHCOCH₃]₂, Ti(O-nC₄H₉)₂[OC₂H₄N(C₂H₄OH)₂]₂, Ti(OH)₂[OCH(CH₃)COOH]₂, Ti(OCH₂CH(C₂H₅)CH(OH)C₃H₇)₄, and Ti(O-nC₄H₉)₂(OCOC₁₇H₃₅), and the like.

### Compound of Tetravalent Titanium

As the compound of tetravalent titanium employed in the manufacture of the metal-doped titanium oxide, various titanium compounds can be employed as long as titanium hydroxide, also known as ortho-titanic acid (H₄TiO₄), can be formed upon reacting with a base. Examples thereof include water-soluble inorganic acid salts of titanium such as titanium tetrachloride, titanium sulfate, titanium nitrate, and titanium phosphate. Other examples include water-soluble organic acid salts of titanium such as titanium oxalate, or the like. Among the various titanium compounds described above, titanium tetrachloride is preferable since superior water solubility is exhibited, and there are no remaining components other than titanium in the dispersion of a metal-doped titanium oxide.

In addition, in the case of employing a solution of a compound of tetravalent titanium, the concentration of the aforementioned solution is not particularly limited as long as a gel of titanium hydroxide can be formed, but a relatively dilute solution is preferable. Specifically, the concentration of the compound of tetravalent titanium preferably ranges from 5 to 0.01% by weight, and more preferably ranges from 0.9 to 0.3% by weight.

### Base

As a base to be reacted with the aforementioned compound of tetravalent titanium, various bases can be employed as long as titanium hydroxide can be formed by reacting with the compound of tetravalent titanium. Examples thereof include ammonia, sodium hydroxide, sodium carbonate, potassium hydroxide, or the like. Ammonia is preferable.

In addition, in the case of employing a solution of the aforementioned base, the concentration of the aforementioned solution is not particularly limited as long as a gel of titanium hydroxide can be formed, but a relatively dilute solution is preferable. Specifically, the concentration of the basic solution preferably ranges from 10 to 0.01% by weight, and more preferably ranges from 1.0 to 0.1% by weight. In particular, in the case of employing aqueous ammonia as the basic solution, the concentration of ammonia preferably ranges from 10 to 0.01% by weight, and more preferably ranges from 1.0 to 0.1% by weight.

### Metal Compound

As examples of compounds of copper, manganese, nickel, cobalt, iron, or zinc, mention may be made of the compounds described below.
Ni compounds: Ni(OH)₂, NiCl₂
Co compounds: Co(OH)NO₃, Co(OH)₂, CoSO₄, CoCl₂
Cu compounds: Cu(OH)₂, Cu(NO₃)₂, CuSO₄, CuCl₂, Cu(CH₃COO)₂
Mn compounds: MnNO₃, MnSO₄, MnCl₂
Fe compounds: Fe(OH)₂, Fe(OH)₃, FeCl₃
Zn compounds: Zn(NO₃)₂, ZnSO₄, ZuCl₂

The concentration of titanium peroxide in the aqueous dispersion obtained in accordance with the first to third manufacturing methods (the total amount including coexisting copper, manganese, nickel, cobalt, iron or zinc) preferably ranges from 0.05 to 15% by weight, and more preferably ranges from 0.1 to 5% by weight. In addition, regarding the content of copper, manganese, nickel, cobalt, iron, or zinc, the molar ratio of titanium and the aforementioned metal component is preferably 1:1 in the present invention. In view of stability of the aqueous dispersion, the ratio preferably ranges from 1:0.01 to 1:0.5, and more preferably ranges from 1:0.03 to 1:0.1.

The substrate of the present invention is not particularly limited. Various inorganic substrates and organic substrates or combinations thereof can be employed.

Examples of an inorganic substrate include, for example, substrates formed from substances of transparent or opaque glass, metals, metal oxides, ceramics, concrete, mortar, stone, or the like. In addition, examples of an organic substrate include, for example, substrates formed from substances such as organic resins, wood, paper, or the like. As detailed examples of the organic resins, mention may be made of, for example, polyethylene, polypropylene, polycarbonate, polyacrylate, polyester, polyamide, polyurethane, ABS resins, polyvinyl chloride, silicone, melamine resins, urea resins, silicone resins, fluorine resins, cellulose, epoxy-modified resins, or the like. Shapes of the substrates are not particularly limited, and any shapes such as cubics, cuboids, spheres, sheets, fibers, or the like can be employed. In addition, the substrates may be porous. As the substrates, substrates for use in architecture or civil engineering, sealing materials, bodies for use in carrying devices or equipments, and display screens are suitable.

The surface of the substrate may be coated with paint. As the coating material, so-called paint containing a colorant and a synthetic resin such as an alkyd resin, an acrylic resin, an amino resin, a polyurethane resin, an epoxy resin, a silicone resin, a fluorine resin, an acrylic silicone resin, an unsaturated polyester resin, an ultraviolet-curable resin, a phenol resin, a vinyl chloride resin, or a synthetic resin emulsion can be preferably employed.

The thickness of the aforementioned coating film preferably ranges from 0.01 to 100 µm, more preferably ranges from 0.1 to 50 µm, and in particular, preferably ranges from 0.5 to 10 µm.

In addition, as a method for coating, for example, a spray coating method, a dip coating method, a flow coating method, a spin coating method, a roll coating method, a brush coating method, a sponge coating method, or the like can be employed. In addition, in order to improve physical properties such as hardness of the coating film, adhesiveness with the substrate, and the like, heating is preferably carried out within a range acceptable for the substrate and the coating film.

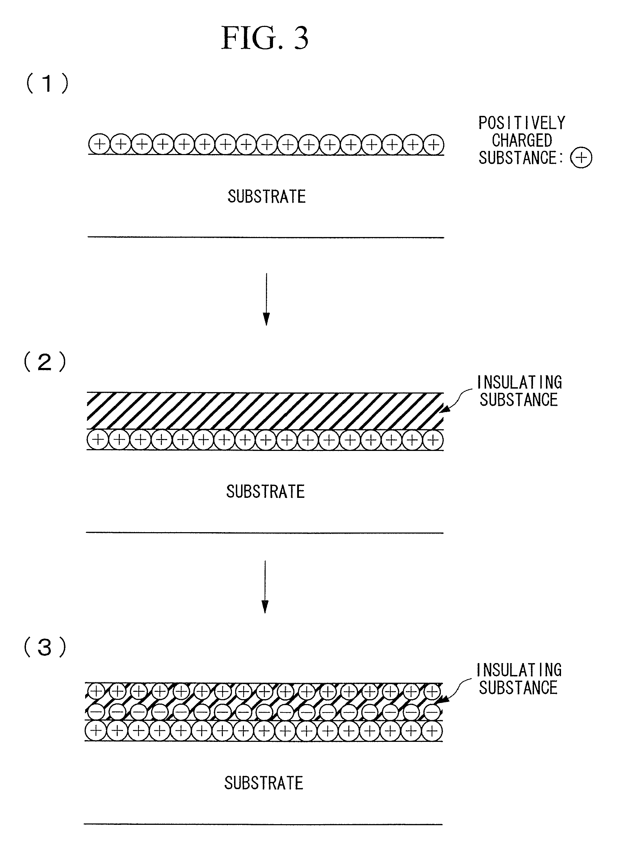

FIG. 3 to FIG. 6 are diagrams showing some modes of imparting a positive charge to the surface of a substrate by employing the aforementioned positive ion, the aforementioned conductor or dielectric having a positive charge, the aforementioned composite formed from (a conductor)-(a dielectric or a semiconductor), or a mixture thereof.

FIG. 3 shows a mode in which a positively-charged substance selected from a positive ion, a conductor or dielectric having a positive charge, or a mixture thereof with the above composite, is arranged on the surface of a substrate, and the surface of the positively-charged substance is covered with a film of an insulating organic or inorganic substance.

In the mode shown in FIG. 3, as shown in FIG. 3 (1), first, a positively-charged substance selected from a positive ion, a conductor or dielectric having a positive charge, or a mixture thereof is arranged on the substrate. The arrangement of the positively-charged substances shown in FIG. 3 (1) can be formed by, for example, at least once, mounting a metal film with a positive charge formed from the aforementioned metal element on the substrate, or applying a solution, suspension, or emulsion of a salt, hydroxide, or oxide of the aforementioned metal ion to the substrate, and subsequently drying. In addition, a positively-charged substance can also be arranged in the surface layer of the substrate by, for example, mixing a specified amount of a salt, hydroxide, or oxide of the aforementioned metal ion, or of the aforementioned metal having a positive charge, which has a higher or lower specific gravity than that of a liquid to be cured of the substance forming the substrate, with the liquid to be cured in a casting mold, and subsequently allowing it to stand for a specified period to cure the aforementioned liquid. In the case of painting the substrate, the aforementioned positively-charged substance may be contained in the painting material.

For the sake of convenience, in FIG. 3 (1), the positively-charged substance is arranged as a single layer, but it may be arranged as plural layers. The thickness of the layer preferably ranges from 0.01 µm to 2.0 µm, and more preferably ranges from 0.03 µm to 1.0 µm. In addition, the layer of the positively charged substance on the substrate is not necessarily a continuous layer as shown in FIG. 3 (1), and may be a discontinuous layer. In addition, the positively-charged substance may be arranged on the substrate as clusters (aggregates of the positively-charged substance) by means of discontinuously dispersing.

In the mode shown in FIG. 3, the positively-charged substance is subsequently coated with a film of an insulating organic or inorganic substance, as shown in FIG. 3 (2). The thickness of the film preferably ranges from 0.01 µm to 100 µm, more preferably ranges from 0.05 µm to 50 µm, and in particular, preferably ranges from 0.1 µm to 10 µm.

The types of the insulating organic substances are not particularly restricted as long as they possess a behavior as a dielectric. The insulating organic substance is preferably formed from a polymer material exhibiting remarkable properties with respect to water such as water-repellent properties or hydrophilic properties.

As examples of water-repellent polymers, mention may be made of polyolefins such as polyethylene, polypropylene, polystyrene, and the like; acrylic resins such as polyacrylate, acrylonitrile/styrene copolymer (AS), acrylonitrile/butadiene/styrene copolymer (ABS), and the like; polyacrylonitriles; polyhalogenated vinyls such as polyvinyl chloride, polyvinylidene chloride, and the like; fluorine resins such as polytetrafluoroethylene, fluoroethylene/propylene copolymer, polychlorotrifluoroethylene (PCTFE), polyvinylidene fluoride (PVDF), fluorinated vinylidene/trifluoroethylene copolymer, and the like; polyesters such as polyethylene terephthalate, polycarbonate, and the like; phenolic resins; urea resins; melamine resins; polyimide resins; polyamide resins such as nylon and the like; epoxy resins; polyurethanes; and the like.

As the water-repellent polymer material, a fluorine resin is preferable, and in particular, fluorinated vinylidene/trifluoroethylene copolymers having strong dielectric properties and water-repellent properties, β-type crystals of polyvinylidene fluoride, and those containing the same are preferable. As the fluorine resins, commercially available products can be used. As examples of the commercially available products, mention may be made of, for example, HIREC 1550 manufactured by NTT-AT Co., Ltd., and the like.

In addition, a fluorine resin emulsion comprising a surfactant and at least one fluorine resin selected from the group consisting of copolymers formed from two or more types of olefins containing fluorine atoms, copolymers between olefins containing fluorine atoms and hydrocarbon monomers, and mixtures of copolymers formed from two or more types of olefins containing fluorine atoms and thermoplastic acrylic resins, as well as a curing agent (see Japanese Unexamined Patent Application, First Publication No. H05-124880; Japanese Unexamined Patent Application, First Publication No. H05-117578; and Japanese Unexamined Patent Application, First Publication No. H05-179191) and/or a composition comprising the aforementioned silicone resin-based water repellent agent (see Japanese Unexamined Patent Application, First Publication No. 2000-121543; and Japanese Unexamined Patent Application, First Publication No. 2003-26461) can also be employed. As the aforementioned fluorine resin emulsion, a commercially available product can be used, such as ZEFFLE series available from Daikin Industries, Ltd., and LUMIFLON series available from Asahi Glass Co., Ltd. As the aforementioned curing agent, a melamin-based curing agent, an amine-based curing agent, a polyvalent isocyanate-based curing agent, and a block polyvalent isocyanate-based curing agent are preferably employed.

As examples of hydrophilic polymer materials, mention may be made of polyethers such as polyethylene glycol, polypropylene glycol, a block copolymer formed from polyethylene glycol and polypropylene glycol, and the like; polyvinyl alcohols; polyacrylic acids (including salts such as alkali metal salts, ammonium salts and the like), polymethacrylic acids (including salts such as alkali metal salts, ammonium salts and the like), or a copolymer formed from polyacrylic acid and polymethacrylic acid (including salts such as alkali metal salts, ammonium salts and the like); polyacrylamides; polyvinyl pyrrolidones; hydrophilic celluloses such as carboxymethylcellulose (CMC), methylcellulose (MC), and the like; natural hydrophilic polymer compounds such as polysaccharide and the like; and the like.

Composite products formed by blending inorganic dielectrics such as silica, glass fibers, carbon fibers, and the like in the aforementioned polymer materials can also be employed. In addition, as the aforementioned polymer materials, coating materials can also be employed. In particular, in the case of painting the substrate, the same substances as the painting materials disclosed in the aforementioned paragraph [0054] can also be employed as the aforementioned polymer materials.

The types of the insulating inorganic substances are not particularly restricted as long as they have behaviors as a dielectric. The insulating inorganic substances are preferably formed from water-repellent or hydrophilic inorganic compounds.

As examples of water-repellent inorganic materials, mention may be made of, for example, silane-based water-repellent agents, fluorine-based water-repellent agents, and the like. In particular, a fluorine-based water-repellent agent is preferable, and examples thereof include a fluorine-containing compound such as a compound containing a perfluoroalkyl group or the like, or a composition containing a fluorine-containing compound. When a fluorine-containing compound having increased adherence to the surface of the substrate is selected, after applying it to the surface of the substrate, it is not always necessary that the chemical components of the water repellent agent or the water-absorption inhibitor react with the substrate, and a chemical bond may be formed, or the chemical components may crosslink with each other.

The fluorine-containing compound which can be employed as the aforementioned fluorine-based water-repellent agent is preferably one containing a perfluoroalkyl group in a molecule and having a molecular weight ranging from 1,000 to 20,000. As examples thereof, mention may be made of perfluorosulfonate, perfluorosulfonic acid ammonium salt, perfluorocarboxylate, perfluoroalkyl betaine, perfluoroalkyl ethylene oxide adduct, perfluoroalkyl amine oxide, perfluoroalkyl phosphate, perfluoroalkyl trimethylammonium salt, and the like. Among these, perfluoroalkyl phosphate and perfluoroalkyl trimethylammonium salt are preferable since they exhibit superior properties of adhering to the surface of the substance. These materials are commercially available as SURFLON S-112 and SURFLON S-121 (both product names, manufactured by Seimi Chemical Co., Ltd.), and the like.

In particular, in the case of employing the fluorine-based water-repellent agent, the properties of the surface of the substrate can be changed from water repellent properties to hydrophilic properties by controlling ultraviolet radiation or electromagnetic radiation such as sunlight (in particular, UV) to the surface of the substrate. Thereby, depending on the properties required for the substrate, the protective modes thereof can be freely modified. For this reason, in the case of utilizing both the properties of contact angle between water and oil, and the properties of surface electric charge, the fluorine-based water-repellent agent is preferably employed.

As examples of hydrophilic inorganic materials, mention may be made of, for example, SiO₂, silicon compounds, or substances such as titanium oxide having photocatalytic functions.

The photocatalytically functional substances contain specific metal compounds, and have a function of oxidizing and decomposing the organic and/or inorganic compounds on the surface of the aforementioned layer due to photoexcitation. It is believed that the photocatalytic principle is that a specific metal compound produces radical species such as OH⁻ or O₂⁻ from oxygen or moisture in the air by means of photoexcitation, and the radical species oxidize-reduce-decompose the organic and/or inorganic compounds.

As the aforementioned metal compound, in addition to representative titanium oxide (TiO₂), ZnO, SrTiOP₃, CdS, CdO, CaP, InP, In₂O₃, CaAs, BaTiO₃, K₂NbO₃, Fe₂O₃, Ta₂O₅, WO₃, NiO, Cu₂O, SiC, SiO₂, MoS₃, InSb, RuO₂, CeO₂, and the like are known.

The film formed from a photocatalytically functional substance can be formed by applying, on a positively-charged substance, an aqueous dispersion including fine particles (approximately 2 nm to 20 nm) of the aforementioned metal compounds together with various additives, if necessary, and drying. The thickness of the film preferably ranges from 0.01 µm to 2.0 µm, and more preferably ranges from 0.1 µm to 1.0 µm. For forming the film of the photocatalytically functional substance, use of an aqueous dispersion is preferable, but an alcohol can be employed as a solvent.

The aqueous dispersion for forming a photocatalytically functional substance film can be produced by, for example, the methods described below. Titanium peroxide in the aqueous dispersion can be converted into titanium oxide in the state of the dried coating film.

### First Manufacturing Method

The aforementioned tetravalent titanium compound and a base such as ammonia are reacted together to form titanium hydroxide. Subsequently, the aforementioned titanium hydroxide is peroxidized with an oxidizing agent such as hydrogen peroxide or the like to form ultra-fine particles of amorphous-type titanium peroxide. In addition, the amorphous-type titanium peroxide is converted into anatase-type titanium peroxide by heat treatment.

### Second Manufacturing Method

The aforementioned tetravalent titanium compound is peroxidized by an oxidizing agent such as hydrogen peroxide or the like. Subsequently, the peroxidized tetravalent titanium compound is reacted with a base such as ammonia to form ultra-fine particles of amorphous-type titanium peroxide. In addition, the amorphous-type titanium peroxide is converted into anatase-type titanium peroxide by heat treatment.

### Third Manufacturing Method

The aforementioned tetravalent titanium compound, an oxidizing agent such as hydrogen peroxide or the like, and a base such as ammonia are reacted together to carry out formation of titanium hydroxide and peroxidation simultaneously, and thus forming ultra-fine particles of amorphous-type titanium peroxide. In addition, the amorphous-type titanium peroxide is converted into anatase-type titanium peroxide by heat treatment.

In the film of the photocatalytically functional substance, a metal for improving photocatalytic effects (such as Ag or Pt) can be blended. In addition, various substances such as metal salts or the like can be added within a range which does not deactivate the photocatalytic functions. As examples of the aforementioned metal salts, mention may be made of salts of metals such as aluminum, tin, chromium, nickel, antimony, iron, silver, cesium, indium, cerium, selenium, copper, manganese, calcium, platinum, tungsten, zirconium, zinc, or the like. In addition thereto, as some metals or non-metals, hydroxides or oxides thereof can also be employed. More particularly, examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, calcium chloride, platinum (II) chloride, tungsten tetrachloride, tungsten oxydichloride, potassium tungstate, gold chloride, zirconium oxychloride, zinc chloride, or the like. In addition, as compounds other than the metal salts, mention may be made of indium hydroxide, silicotungstic acid, silica sol, calcium hydroxide, or the like. In addition, in order to improve the fixing properties of the photocatalytically functional layer, an amorphous type titanium oxide can also be blended.

Due to the effects of the photocatalytically functional substance film, the contaminants on the surface of the substrate are decomposed, and for this reason, contamination on the surface of the substrate can be prevented, and the cosmetic properties of the substrate can be maintained over time. If the photocatalytically functional substance film is directly formed on the substrate, the photocatalytically functional substance film may be stripped from the substrate over time. By providing a positively-charged substance between these, the substrate can be finely integrated with the photocatalytically functional substance film.

As described above, when the positively-charged substance is coated by the film of the insulating organic or inorganic substance, in the mode shown in FIG. 3, a negative charge is produced on the surface contacting the positively-charged substance, and a positive charge is produced on the surface of the film separated from the positively-charged substance, by means of dielectric polarization in the film of the insulating organic or inorganic substance, as shown in FIG. 3 (3). By means of the aforementioned positive charge, contamination of the surface of the substrate can be prevented as described below. In addition, the chemical properties of the film of the insulating organic or inorganic substance, such as water repellent properties or hydrophilic properties, can be maintained. For this reason, prevention of contamination due to the aforementioned chemical properties can be further enhanced.

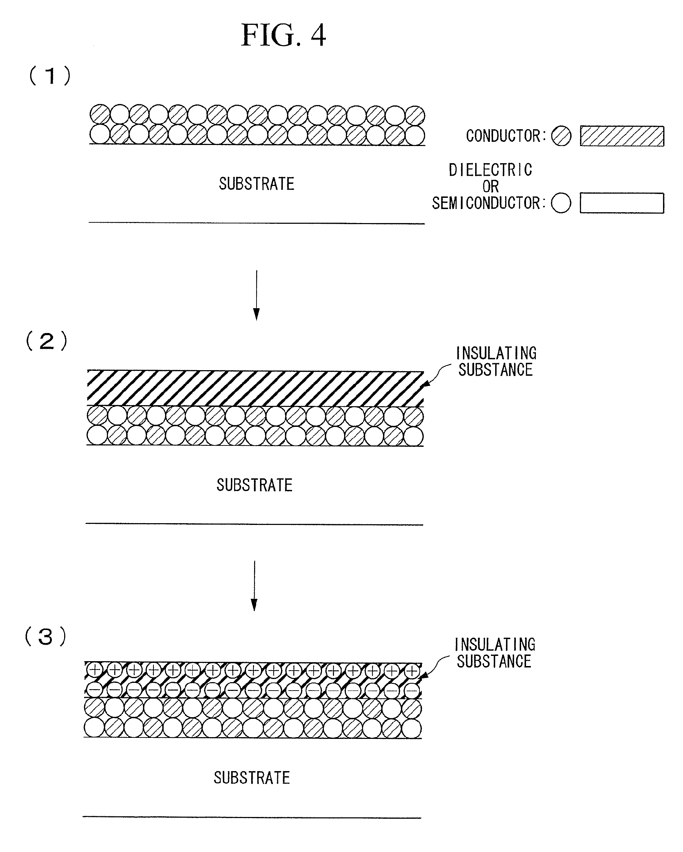

FIG. 4 shows a mode in which a positively-charged substance formed from a combination of a conductor and a dielectric or a semiconductor is arranged on the surface of the substrate, and the aforementioned positively-charged substance is covered with a film of the insulating organic or inorganic substance.

The mode shown in FIG. 4 is different from the mode shown in FIG. 3 in that a layer of a composite of (a conductor)-(a dielectric or a semiconductor), and preferably a metal-doped titanium oxide, is formed on the substrate.

The particle size of the composite formed from the conductor and the dielectric or the semiconductor can range from several nm to several-tens of µm. In addition, the blending ratio of the fine particles of the conductor and the fine particles of the dielectric or the semiconductor in the composite is preferably 1:1. The thickness of the aforementioned composite layer can range from 10 nm to 100 µm. The aforementioned composite layer can be produced by, for example, applying an aqueous dispersion of the aforementioned metal-doped titanium oxide to the surface of the substrate, followed by drying, at least one time. As the aforementioned coating method, a conventional film coating method such as brush coating, roll coating, spray coating or the like can be used.

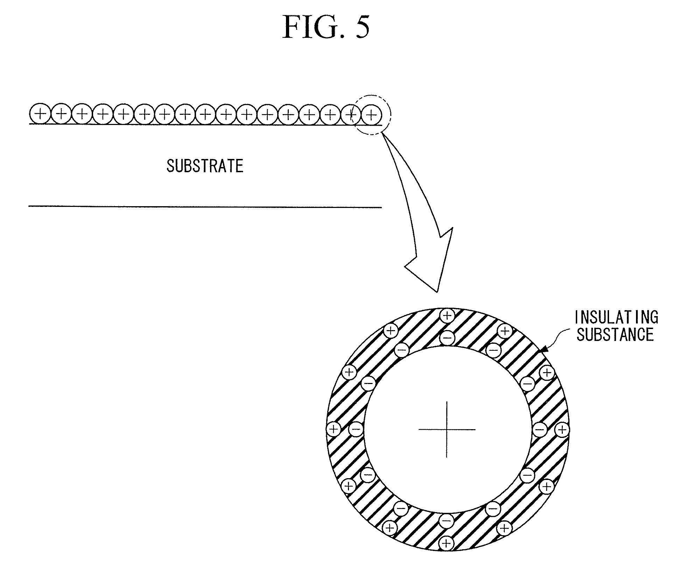

FIG. 5 shows a mode in which a positively-charged substance which is a positive ion, a conductor or dielectric having a positive charge, a composite of (a conductor)-(a dielectric or a semiconductor), or a mixture thereof is arranged on the surface of the substrate, and an insulating organic or inorganic substance is arranged in non-film form on the surface of the positively-charged substance.

As a method for arranging the insulating organic or inorganic substance in non-film form, mention may be made of, for example, a method in which the surface of the aforementioned positively-charged substance is chemically modified with an atom or an atomic group of the organic or inorganic substance by means of grafting or the like. As the aforementioned atom or atomic group for chemical modification, one containing a fluorine atom is preferable. As the fluorine compound for use in chemical modification, for example, a fluoroalkyl acrylate copolymer is preferable, and is commercially available as FTONE GM-101 or FTONE GM-105 from Daikin Industries, Ltd. The aforementioned chemical modification can be carried out by applying a solution of the aforementioned fluorine compound on the surface of the substrate, and subsequently drying, at least one time. As the aforementioned coating method, a conventional film coating method such as brush coating, roll coating, spray coating or the like can be used.

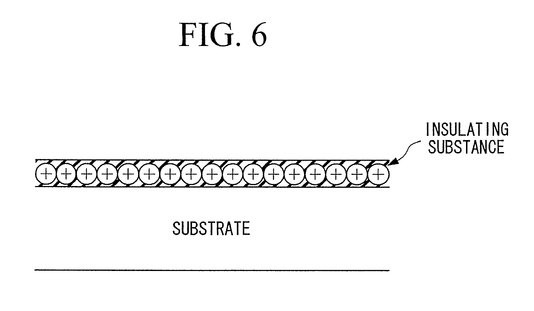

FIG. 6 shows a mode in which a positively-charged substance which is a positive ion, a conductor or dielectric having a positive charge, a composite formed from a conductor and a dielectric or a semiconductor, or a mixture thereof is blended in an insulating organic or inorganic substance, and a film of the aforementioned insulating organic or inorganic substance is formed on the surface of the substrate. The thickness of the aforementioned film preferably ranges from 0.01 µm to 100 µm, more preferably ranges from 0.1 µm to 50 µm, and in particular, preferably ranges from 0.5 µm to 10 µm. The positively-charged substances are not necessarily exposed to the surface of the film, and they all may be present in the film. In the same manner as the cases shown in FIG. 3 to FIG. 5, in the aforementioned insulating film, a negative charge is produced at the side contacting the positively-charged substance, and a positive charge is produced on the surface of the film separated from the positively-charged substance, by means of dielectric polarization, that is not shown in the drawing.

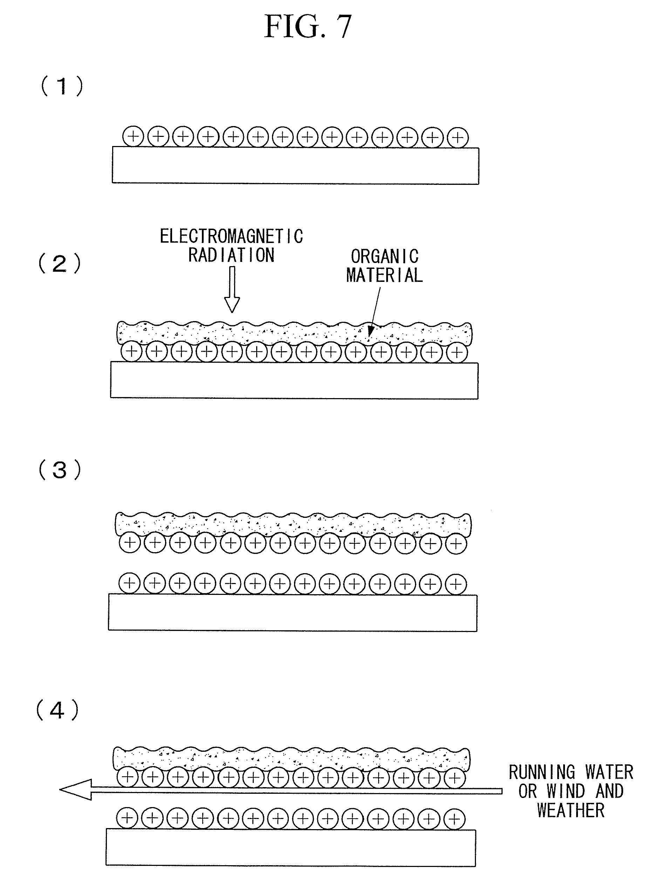

Next, a mechanism of removal of contaminants from the surface of the substrate which is positively charged is shown in FIG. 7.

First, as shown in FIG. 3 to FIG. 6, a positive charge is provided on the surface of the substrate (see FIG. 7 (1)).

Contaminants are deposited on the surface of the substrate, followed by photooxidizing by means of the effects of electromagnetic radiation such as sunlight or the like. Thereby, a positive charge is also provided to the contaminants (FIG. 7 (2)).

Electrostatic repulsion of positive charges between the surface of the substrate and the contaminants is produced, and repulsion power is produced on the contaminants. Thereby, the fixing power of the contaminants to the surface of the substrate is reduced (FIG. 7 (3)).

By means of physical effects such as wind and weather, the contaminants are easily removed from the substrate (FIG. 7 (4)). Thereby, the substrate can be self-cleaned.

Conventionally, protection of the surface of a substrate was carried out by coating the surface of the substrate with an organic or inorganic substance having superior water repellent properties or hydrophilic properties. However, the aforementioned organic or inorganic substance generally possesses a negative charge. For this reason, there is a problem in that contaminants adhere to the surface over time and the protective properties are remarkably impaired. In contrast, in the present invention, a positive charge is imparted to the organic or inorganic substance present on the surface of the substrate, and for this reason, the problem described above is eliminated. In addition, while the chemical properties such as water repellent properties, hydrophilic properties, and the like of the organic or inorganic substance of the surface of the substrate are maintained, or alternatively after the aforementioned properties are appropriately modified, self-cleaning properties can be imparted.

Therefore, in the present invention, by utilizing the positive charge provided on the surface of the substrate, a product can be produced in which the functions of the organic or inorganic substance on the substrate are exhibited, and at the same time, "functions of preventing contamination and preventing fogging" are exhibited. This technology can be applied to any substrate. In particular, by providing a positive charge on the surface of an organic substance having superior water repellent properties or hydrophilic properties, the functions thereof can be maintained for a long time, and for this reason, application to a substrate formed from plastics is preferable. Thereby, "clean plastics" can be provided.

In addition, the positive charges of the surface of the substrate can reduce oxidative degradation of the substrate due to electromagnetic radiation. In other words, oxidative degradation of the substrate is caused by producing radicals such as ¹O₂, ^{·}OH, or the like by means of electromagnetic radiation such as ultraviolet radiation or the like on the surface of the substrate or in the substrate, and causing an oxidative decomposition reaction. The positively charged surface of the substrate can make these radicals stable molecules. Therefore, it is believed that oxidative deterioration of the substrate may be prevented or reduced. When the substrate is made of a metal, occurrences of rust can be reduced by the same processes as described above.

In order to improve the aforementioned self-cleaning functions (anti-contamination functions), and promote dispersion of the aforementioned positively-charged substance, various surfactants or dispersants are preferably blended together with the positively-charged substance.

As the surfactants or dispersants, various organic silicon compounds can be employed. As the organic silicon compounds, various silane compounds, and various silicone oils, silicone gums, and silicone resins can be employed. One having an alkyl silicate structure or a polyether structure, or one having both an alkyl silicate structure and a polyether structure, in the molecule thereof, is preferable.

Here, the alkylsilicate structure refers to a structure in which alkyl groups are bonded to silicon atoms in the siloxane backbone. On the other hand, as examples of the polyether structure, mention may be made of molecular structures such as polyethylene oxide, polypropylene oxide, polytetramethylene oxide, a block copolymer of polyethylene oxide and polypropylene oxide, a copolymer of polyethylene and polytetramethylene glycol, or a copolymer of polytetramethylene glycol and polypropylene oxide, although there is no limitation thereto. Among these, a block copolymer of polyethylene oxide and polypropylene oxide is particularly suitable in view of controllability of the wettability by the degree of blocking or the molecular weight.

An organic substance having both an alkylsilicate structure and a polyether structure in the molecule thereof is particularly preferable. Specifically, a polyether-modified silicone such as polyether-modified polydimethylsiloxane or the like is suitable. The polyether-modified silicone can be manufactured using a generally known method, for example, using a method described in Synthesis Example 1, 2, 3 or 4 in Japanese Unexamined Patent Application, First Publication No. H04-242499 or the Reference Example in Japanese Unexamined Patent Application, First Publication No. H09-165318. In particular, a polyethylene oxide-polypropylene oxide block copolymer-modified polydimethylsiloxane obtained by reacting a block copolymer of both-end-metallyl polyethylene oxide-polypropylene oxide with dihydropolydimethylsiloxane is suitable.

Specifically, TSF4445 or TSF4446 (both manufactured by GE Toshiba Silicones Co., Ltd.), SH200 (manufactured by Dow Corning Toray Silicone Co., Ltd.), KP series (manufactured by Shin-Etsu Chemical Co., Ltd.), DC3PA or ST869A (both manufactured by Dow Corning Toray Silicone Co., Ltd.), or the like can be employed. They are additives for paints, and can be employed as appropriate, as long as the aforementioned properties can be imparted.

In addition, when a positively-charged substance layer is formed on a substrate by adding a silicone or modified silicone having an alkyl silicate structure or a polyether structure, or both of these, to the aforementioned metal-doped titanium oxide, photocatalytic functions are not be exhibited on the surface of the positively-charged substance layer, and anti-contamination, antimicrobial properties, gas decomposition, or water decontamination due to decomposition of the organic compounds are not be observed. Therefore, by employing the aforementioned metal-doped titanium oxide as a composite, it is possible to prevent photooxidative degradation of the substrate.

In the present invention, when the positively-charged substance forms a layer, an intermediate layer may be present between the surface of the substrate and the positively-charged substance layer. In particular, in the case of forming the positively-charged substance layer containing an organic silicon compound on the surface of the substrate, it is preferable that an intermediate layer containing a silane compound be previously formed on the substrate. The intermediate layer includes a large amount of Si-O bonds, and for this reason, it is possible to improve the strength of the positively-charged substance layer or the adhesiveness with the substrate. In addition, the aforementioned intermediate layer also exhibits a function of preventing moisture seeping in the substrate.

Examples of the aforementioned silane compounds include a hydrolyzable silane, a hydrolysate thereof, and a mixture of these. As the hydrolyzable silane, various alkoxysilanes can be employed. Examples thereof include a tetraalkoxysilane, an alkyltrialkoxysilane, a dialkyldialkoxysilane, or a trialkylalkoxysilane. Among these, one type of hydrolyzable silane may be employed alone or two or more types of hydrolyzable silanes may be employed in combination. In addition, various organopolysiloxanes may be added to the aforementioned silane compounds. As an agent for forming an intermediate layer containing the silane compound, DRYSEAL S (manufactured by Dow Corning Toray Silicone Co., Ltd.) may be mentioned.

In addition, as the agent for forming an intermediate layer, a silicone resin which is curable at room temperature, such as a methylsilicone resin, a methylphenylsilicone resin, or the like may be employed. As examples of a silicone resin which is curable at room temperature, mention may be made of AY42-170, SR2510, SR2406, SR2410, SR2405, and SR2411 (all manufactured by Dow Corning Toray Silicone Co., Ltd.).

The intermediate layer may be colorless and transparent, or colored and transparent, translucent, or opaque. Here, "colored" means not only a colored layer which is red, blue, or green, or the like, but also a white layer. In order to obtain a colored intermediate layer, various coloring agents such as inorganic or organic pigments, dyes, or the like are preferably blended in the intermediate layer.

Examples of inorganic pigments include carbon black, black lead, yellow lead, yellow iron oxide, red lead oxide, red iron oxide, ultramarine blue, chromic oxide green, iron oxide, or the like. As organic pigments, azo-based organic pigments, phthalocyane-based organic pigments, threne-based organic pigments, quinacridone-based organic pigments, dioxazine-based organic pigments, isoindolinone-based organic pigments, diketopyrolopyrrole, various metal complexes, or the like can be employed, and organic pigments exhibiting superior light resistance are preferable. Examples of organic pigments exhibiting light resistance include, for example, Hansa Yellow or Toluidine Red which are insoluble azo-based organic pigments, Phtalocyanine Blue B or Phthalocyanine Green which is a phthalocyane-based organic pigment, Quinacridone Red which are quinacridone-based organic pigments, or the like.

Examples of dyes include basic dyes, direct dyes, acidic dyes, vegetable dyes or the like. Dyes exhibiting superior light resistance are preferable. For example, direct scarlet red, roccellin, or azo rubine, as red; direct orange R conc, or acid orange as orange; chrysophenine NS, or methanil yellow, as yellow; direct brown KGG, or acid brown R, as brown; direct blue B as blue; direct black GX, or nigrosine BHL as black; or the like are particularly preferable.

When the intermediate layer is formed from a silane compound or a silicone resin, the mixing ratio (weight ratio) of the silane compound or silicone resin to the pigment preferably ranges from 1:2 to 1:0.05, and more preferably ranges from 1:1 to 1:0.1.

In the intermediate layer, an additive such as a dispersant, a stabilizer, a leveling agent, or the like may be blended. The aforementioned additives have effects of facilitating the formation of the intermediate layer. In addition, when a colorant such as a pigment, a dye, or the like is blended, it is also possible to add a binder for assisting the fixing of the aforementioned colorant. As the binder in the aforementioned case, various binders for use in paints having acrylic esters or acrylate copolymer resins as main ingredients and exhibiting superior weather resistance can be employed. Examples thereof include POLYSOL AP-3720 (manufactured by Showa Highpolymer Co., Ltd.), POLYSOL AP-609 (manufactured by Showa Highpolymer Co., Ltd.), or the like.

The intermediate layer can be formed, for example, as described below. A solution containing an agent for forming an intermediate layer consisting of a silane compound or a silicone resin in a volatile solvent, and another optional solution containing the aforementioned colorant, the aforementioned additive, and the aforementioned binder are applied to the surface of the aforementioned substrate so that the thickness ranges from approximately 2 to 5 mm. If necessary, heating is carried out to evaporate the volatile solvent, thus forming an intermediate layer on the substrate. The colored intermediate layer is integrated with the substrate, and thereby, colored cosmetic properties can be imparted to the substrate.

The thickness of the intermediate layer formed on the substrate as described above is not particularly limited, and preferably ranges from 0.01 to 1.0 µm, and more preferably ranges from 0.05 µm to 0.3 µm. In addition, in the case of adding the colorant, additive, or binder, the thickness thereof preferably ranges from 1.0 µm to 100 µm, and more preferably ranges from 10 µm to 50 µm.

As a method for forming an intermediate layer on the substrate, any known methods can be employed. For example, spray coating, dip coating, flow coating, spin coating, roll coating, brush coating, sponge coating, or the like can be employed. In order to improve physical properties such as hardness of the intermediate layer, adhesiveness with the substrate, or the like, after the intermediate layer is formed on the substrate, heating is preferably carried out at a temperature which is within an acceptable range.

### Industrial Applicability

The present invention can be utilized in any field in which various design properties and increased water resistance and contamination resistance are required. The present invention is suitably employed in the manufacturing of many products utilized outside or inside, such as building materials; outdoor air conditioners; kitchen instruments; hygiene instruments; lighting apparatuses; automobiles; bicycles; two-wheeled motor vehicles; airplanes; trains; boats and ships; or the like, or various machines, electronics, face panels of televisions; or the like, manufactured from glass, metals, ceramics, concrete, timber, stone materials, polymer resin covers, polymer resin sheets, fibers (clothes, curtains, and the like), sealants, or the like, or a combination thereof. In particular, the present invention is preferably employed in building materials. Architectural structures such as houses, buildings, roads, tunnels, or the like, manufactured by employing the aforementioned building materials, can exhibit superior water resistance and contamination resistance effects over time.

### Examples

### Example 1

STi Titania Highcoat Z (Z18-1000A), i.e., a liquid containing a metal-doped titanium oxide, was sprayed onto the surface of a commercially available clear float glass plate (100 mm long X 100 mm wide X 4 mm thickness) by means of a spray at a rate of 12 g/m², and subsequently dried for 15 minutes at 80°C. Subsequently, HIREC 1550 (manufactured by NTT Advanced Technology Corporation), i.e., a fluorine-based ultra water-repellent resin liquid, was applied thereto by means of a brush, and subsequently dried for 15 minutes at 80°C. Thereby, an evaluation substrate was produced.

### Example 2

An aqueous solution containing copper ions with a concentration of approximately 1,800 ppm, which had been obtained by adding 1 g of copper to 20 g of a mixture of 7% hydrogen peroxide water and 5% aqueous ammonia (volume ratio = 1:1), and standing for 16 hours, was sprayed onto the surface of a commercially available clear float glass plate (100 mm long X 100 mm wide X 4 mm thickness) by means of a spray at a rate of 10 g/m², and subsequently dried for 15 minutes at 80°C. Subsequently, HIREC 1550 (manufactured by NTT Advanced Technology Corporation) was applied thereto by means of a brush, and subsequently dried for 15 minutes at 80°C. Thereby, an evaluation substrate was produced.

### Comparative Example 1

HIREC 1550 (manufactured by NTT Advanced Technology Corporation) was sprayed onto the surface of a commercially available clear float glass plate (100 mm long X 100 mm wide X 4 mm thickness) by means of a brush, and subsequently dried for 15 minutes at 80°C. Thereby, an evaluation substrate was produced.

### Comparative Example 2

STi Titania Highcoat Z (Z18-1000A) was sprayed onto the surface of a commercially available clear float glass plate (100 mm long X 100 mm wide X 4 mm thickness) by means of a spray at a rate of 12 g/m², and subsequently dried for 15 minutes at 80°C. Thereby, an evaluation substrate was produced. The thickness of the film on the surface of the substrate was approximately 80 nm.

### Comparative Example 3

An aqueous solution containing copper ions with a concentration of approximately 1,800 ppm, which had been obtained by adding 1 g of copper to 20 g of a mixture of 7% hydrogen peroxide water and 5% aqueous ammonia (volume ratio = 1:1), and standing for 16 hours, was sprayed onto the surface of a commercially available clear float glass plate (100 mm long X 100 mm wide X 4 mm thickness) by means of a spray at a rate of 10 g/m², and subsequently dried for 15 minutes at 80°C. Thereby, an evaluation substrate was produced. The thickness of the film on the surface of the substrate was approximately 50 nm.

### Example 3

STi Titania Highcoat Z (Z18- 1000A) was sprayed onto the surface of a commercially available clear float glass plate (100 mm long X 100 mm wide X 4 mm thickness) by means of a spray at a rate of 12 g/m², and subsequently dried for 15 minutes at 80°C. Subsequently, a fluorine-based liquid providing water repellent properties obtained by diluting FTONE GM-101 (manufactured by Daikin Industries, Ltd.) with a mineral oil at 10 times by volume was sprayed thereon by means of a spray at a rate of 12 g/m², and subsequently dried for 15 minutes at 80°C. Thereby, an evaluation substrate was produced.

### Comparative Example 4

A fluorine-based liquid providing water repellent properties obtained by diluting FTONE GM-101 (manufactured by Daikin Industries, Ltd.) with a mineral oil at 10 times by volume was sprayed onto the surface of a commercially available clear float glass plate (100 mm long X 100 mm wide X 4 mm thickness) by means of a spray at a rate of 12 g/m², and subsequently dried for 15 minutes at 80°C. Thereby, an evaluation substrate was produced.

### Evaluation 1

### Charged State

In order to evaluate the charged state of the surface of the evaluation substrate, the operations described below were carried out. First, under an atmosphere at 18°C with 40% humidity, a fine piece made of polypropylene (width = 2 mm, length = 150 mm, and weight = 0.005 g) was prepared, and negative static electricity was charged on the surface of the fine piece by rubbing the fine piece with cotton cloth. Subsequently, the evaluation substrate was vertically arranged by means of a book stand made of polystyrene, and when spacing between the fine piece and the evaluation substrate was set in a range of 10 mm to 20 mm, whether the fine piece was adsorbed to or alternatively repelled by the evaluation substrate was observed. When absorption occurred, the surface of the substrate was evaluated as being positively charged. When repulsion occurred, the surface of the substrate was evaluated as being negatively charged. Preliminarily, when the same operation as described above was carried out with the rubbed fine piece and a bar made of Teflon (trademark) with a diameter of 8 mm which was known as being negatively charged, repulsion was observed. The results are shown in the table.

### Surface Properties

In order to evaluate the hydrophilic properties or water repellent properties of the surface of the evaluation substrate, the following operation was carried out. One drop (0.028 to 0.029 g) of purified water was dripped by means of a dropper from a height of within 10 mm on the evaluation substrate which had been horizontally arranged. Subsequently, visual observation of a contact angle formed by the dripped aqueous droplet and the surface of the evaluation substrate was carried out. When the contact angle was 40° or less, the surface properties were evaluated as being hydrophilic. When the contact angle was 80° or more, the surface properties were evaluated as being water repellent. The results are shown in the table.

**Table 1**

| Evaluation substrate | Charged state | Surface properties |
|---|---|---|
| Example 1 | Positively charged | Water repellent properties |
| Example 2 | Positively charged | Water repellent properties |
| Comparative Example 1 | Negatively charged | Water repellent properties |
| Comparative Example 2 | Positively charged | Hydrophilic properties |
| Comparative Example 3 | Positively charged | Hydrophilic properties |

**Table 2**

| | | |
|---|---|---|
| Evaluation substrate | Charged state | Surface properties |
| Example 3 | Positively charged | Water repellent properties |
| Comparative Example 4 | Negatively charged | Water repellent properties |

As described above, in the substrate which is coated by the insulating polymer film having a negative charge and water repellent properties on its surface, when the substance having a positive charge is arranged as an under layer of the insulating polymer film, the charged state of the surface thereof becomes positive without losing the water repellent properties of the surface thereof. Thereby, the effects of prevention and reduction of contamination of the substrate and the antioxidant effects of the substrate and the insulating polymer film can be obtained.

### Evaluation 2

Each of the evaluation substrates of Example 1, Example 2, Comparative Example 1 and Comparative Example 2 was subjected to an exposure test in Saga Prefecture in Japan, and the contamination states of the evaluation substrates and the contact angles thereof with water were evaluated. In particular, each of the evaluation substrates was exposed to sunlight outdoors for 18 days, and subsequently allowed to stand for 2 days in a dark place.

The results are shown in Table 3. In Table 3, "strong water repellent properties" means that the contact angle with water ranges from 100° to 120°, "water repellent properties" means that the contact angle with water ranges from 80° to 100°, and "hydrophilic properties" means that the contact angle with water ranges from 5° to 20°. For the contact angle, visual measurement was carried out by means of a manual angle meter. In addition, the state in which many white spots adhered to the surface of the substrate was evaluated as "presence of contamination", and the state in which no white spots adhered to the surface of the substrate was evaluated as "no contamination". During the period of the exposure test, it rained three times.

**Table 3**

| Evaluation substrate | Surface state | | | |
|---|---|---|---|---|
| | Immediately after exposure | 10 days after | 18 days after | After standing in a dark place for 2 days |
| Example 1 | Strong water repellent properties | Hydrophilic properties | Hydrophilic properties (No contamination) | Water repellent properties |
| Example 2 | Strong water repellent properties | Hydrophilic properties | Hydrophilic properties (No contamination) | Water repellent properties |
| Comparative Example 1 | Strong water repellent properties | Strong water repellent properties | Strong water repellent properties (Presence of contamination) | Strong water repellent properties |
| Comparative Example 2 | Strong water repellent properties | Strong water repellent properties | Strong water repellent properties (Presence of contamination) | Strong water repellent properties |

As shown in Table 3, in Comparative Example 1 and Comparative Example 2, strong water repellent properties were exhibited regardless of the exposure test. In contrast, in Example 1 and Example 2, hydrophilic properties were exhibited during sunlight exposure, but they changed to water repellent properties when not exposed to sunlight. Therefore, from the results shown in Table 3, it can be seen that water repellent properties and hydrophilic properties of the surface of the substrate can be controlled by arranging the positively-charged substance coated with a fluorine-based water repellent agent. Evaluation 2 was carried out twice, and the same results were obtained in both cases.

## Claims

1. A method for generating a positive charge on a surface of a substrate, **characterized by** arranging at least one positively-charged substance selected from the group consisting of
(1) a positive ion;
(2) a conductor or dielectric having a positive charge; and
(3) a composite formed from a conductor and a dielectric or a semiconductor
on a surface of a substrate or in a surface layer of the substrate, and coating said positively-charged substance with an insulating organic or inorganic substance.

2. A method for preventing or reducing contamination of a surface of a substrate, **characterized by** arranging at least one positively-charged substance selected from the group consisting of
(1) a positive ion;
(2) a conductor or dielectric having a positive charge; and
(3) a composite formed from a conductor and a dielectric or a semiconductor
on a surface of a substrate or in a surface layer of the substrate, and arranging an insulating organic or inorganic substance on said positively-charged substance.

3. A method for protecting a surface of a substrate, **characterized by** arranging at least one positively-charged substance selected from the group consisting of
(1) a positive ion;
(2) a conductor or dielectric having a positive charge; and
(3) a composite formed from a conductor and a dielectric or a semiconductor
on a surface of a substrate or in a surface layer of the substrate, and arranging an insulating organic or inorganic substance on said positively-charged substance.

4. The method according to any one of Claims 1 to 3, wherein said organic or inorganic substance forms a film.

5. The method according to Claim 4, wherein said film is formed from a water repellent or hydrophilic polymer.

6. The method according to any one of Claims 1 to 5, wherein said positively-charged substance forms a layer.

7. The method according to Claim 6, wherein between said surface of the substrate and said layer formed from the positively-charged substance, an intermediate layer is formed.

8. A product comprising a substrate in which a positive charge is generated on a surface thereof, contamination of the surface thereof is prevented and reduced, or the surface thereof is protected, in accordance with the method recited in any one of Claims 1 to 7.
